# EUROPÄISCHE PATENTSCHRIFT

(11) **EP 4 515 133 B1**
(45) Veröffentlichungstag und Bekanntmachung des Hinweises auf die Patenterteilung: **17.12.2025**
(21) Anmeldenummer: 23711994.6
(22) Anmeldetag: 14.03.2023
(51) Int. Cl.: F16L 33/08, F16B 31/02

(54) **SCHELLE MIT SPANNSCHRAUBE UND DREHMOMENTBEGRENZUNG**
CLIP WITH CLAMPING SCREW AND TORQUE LIMITER
COLLIER DE SERRAGE DOTÉ D'UNE VIS DE SERRAGE ET D'UN LIMITEUR DE COUPLE

(30) Priorität: 25.04.2022 DE 102022109926
(43) Veröffentlichungstag der Anmeldung: 05.03.2025
(73) Patentinhaber: NORMA Germany GmbH, 63477 Maintal (DE)
(72) Erfinder: GEPPERT, Helmut, 63477 Maintal (DE); HEEG, Markus, 63477 Maintal (DE); MÖLLER, Björn, 63477 Maintal (DE); LANTSMANN, Natan, 63477 Maintal (DE)
(74) Vertreter: Kusche, Robert
(86) Internationale Anmeldenummer: PCT/EP2023/056504
(87) Internationale Veröffentlichungsnummer: WO 2023/208468

(56) Entgegenhaltungen:
- DE-A1- 4 231 003
- KR-A- 20110 057 873

## Beschreibung

Die Erfindung betrifft eine Schelle, insbesondere eine Schlauchschelle, mit einer Spannvorrichtung, die eine Spannschraube aufweist, gemäß dem Oberbegriff von Anspruch 1.

Schlauchschellen oder Spannschellen, wie z.B. Schneckengewinde-Schellen, bestehen meist aus einem ringförmigen Metallband und dienen der Befestigung eines Schlauchendes an einem festen Anschluss oder an einem Schlauchverbinder. Schlauchschellen werden hauptsächlich im Sanitärbereich, im Automobilbau und im Maschinenbau eingesetzt. Sie werden in der Regel nach DIN 3016 / 3017 und weiteren Industrienormen gefertigt und sind aus Metall.

Zum Festziehen besitzt die Schelle eine Spannvorrichtung mit einer Stell- bzw. Spannschraube. Diese ist derart angebracht, dass durch Anziehen der Spannschraube der Innendurchmesser der Schlauchschelle verringert wird. Dadurch wird der von der Schelle umgriffene Schlauch auf das Anschlussstück gepresst und dichtet radial mit diesem ab.

Beim radialen Abdichten wird das Schlauchmaterial bzw. das Material der Spannvorrichtung durch die Spannkraft stark verformt, weshalb ein zu festes Anziehen der Spannschraube bzw. eine zu große Vorspannkraft eine Beschädigung des Schlauches und/oder der Spannvorrichtung verursachen kann.

Es sind aus dem Stand der Technik bereits aufsteckbare, adapterartige Vorrichtungen zur Sicherstellung eines vorbestimmten Drehmoments beim Anziehen einer Spannschraube einer Schlauchschelle bekannt. Das Dokument DE 42 11 132 C2 beschreibt beispielsweise eine derartige Drehmoment-Sicherungsvorrichtung für den Einsatz bei Schlauchschellen mit Spannschrauben in Kraftfahrzeugen. Zum Beispiel KR 10 2011 0057873 A beschreibt ebenfalls eine Schelle mit einer derartigen Spannvorrichtung. Weiter beschreibt beispielsweise DE 42 31 003 A1 eine sogenannte Abreißschraube für eine Schelle mit einem inneren Kopfteil der nach dem Abreißen des äußeren Kopfteils für einen Schlitzschraubendreher zugänglich ist.

Von Nachteil hierbei ist, dass zur Sicherstellung eines vordefinierten Drehmoments, neben der Spannschraube, eine zusätzliche Vorrichtung bzw. Drehmomentkappe eingesetzt werden muss, was zudem relativ aufwendig in der Fertigung ist.

Ziel der Erfindung ist es, diese und weitere Nachteile des Standes der Technik zu überwinden und eine Schelle mit einer Spannvorrichtung zu schaffen, die mit einfachen Mitteln und wenig Bauteilen kostengünstig aufgebaut ist und eine vereinfachte Sicherstellung eines vorbestimmten Drehmoments ermöglicht.

Hauptmerkmale der Erfindung sind im kennzeichnenden Teil von Anspruch 1 angegeben. Ausgestaltungen sind Gegenstand der Ansprüche 2 bis 10.

Bei einer Schelle mit einem Schellenband, das zwei Enden aufweist, die durch eine Spannvorrichtung miteinander verbindbar sind, die eine Spannschraube mit einem Kopfabschnitt und einem Schaftabschnitt aufweist, wobei der Schaftabschnitt einen Gewindebereich aufweist, mit der die Spannschraube an der Spannvorrichtung verschraubbar ist, wobei der Kopfabschnitt einen Spannkopf zum Aufbringen einer Vorspannkraft in einer Vorspannrichtung aufweist, wobei der Kopfabschnitt einen Montagekopf zum Anziehen der Spannschraube und zur Sicherstellung eines vordefinierten Drehmoments aufweist, wobei der Spannkopf an seiner Oberseite eine Scherebene aufweist, wobei die Scherebene zwischen dem Spannkopf und dem Montagekopf angeordnet ist, wobei der Montagekopf bei Ausübung oder Überschreiten eines vordefinierten Drehmoments an der Scherebene vom Spannkopf der Spannschraube abschert, ist erfindungsgemäß vorgesehen, dass der Spannkopf wenigstens zwei Kanten aufweist.

Insgesamt wird aufgrund des kontrollierten Abscherens eine Überbeanspruchung der Schelle und der Spannvorrichtung bzw. der gespannten Bauteile vermieden.

Unter Schelle sind grundsätzlich alle Arten von Schellen zu verstehen, die zumindest eine Spannvorrichtung aufweisen. Die Erfindung bezieht sich insbesondere auf eingangs erwähnte Schlauch- und Spannschellen, Schneckengewinde-Schellen, Profilschellen, Abgasschellen und Kugelzonenabgasschellen, Rohrschellen sowie Halterungsschellen mit Konsolen.

Durch das Vorsehen einer Scherebene, die quasi als Sollbruchstelle fungiert und zwischen Spann- und Montagekopf angeordnet ist, kann gezielt ein Abscheren des Montagekopfes bei Erreichen eines ausgewählten Drehmoments erreicht werden. Der Montagekopf dient dabei vorteilhafterweise gleichzeitig auch zum Anziehen der Spannschraube. Der Einsatz einer zusätzlichen Drehmoment-Sicherungskappe entfällt aufgrund des integralen Aufbaus des Montage- und Spannkopfes. Bei Ausübung bzw. Überschreiten des vordefinierten Drehmoments sind die Scherkräfte an der Scherebene zwischen Montagekopf und Spannkopf so groß, dass der Montagekopf an der Scherebene vom Spannkopf der Spannschraube abschert. Die Verwendung eines kalibrierten und regelmäßig zu prüfenden elektrischen oder pneumatischen Schraubers, kann somit entfallen.

Beim Abscheren des Montagekopfes können scharfe Kanten an der Scher- bzw. Bruchstelle entstehen. Deshalb ist die Bruchstelle korrosionsgefährdet. Aufgrund der flachen Scherebene auf der Oberseite des Spannkopfes wird vorteilhafterweise das Entgraten von scharfen Kanten nach dem Abscheren des Montagekopfs erleichtert. Nach einer weiteren Ausführungsvariante kann die Scherebene beschichtet sein, um einen Korrosionsschutz zu erreichen (Fernschutzwirkung).

In einer vorteilhaften Ausführungsform sieht die Erfindung vor, dass die Spannschraube einstückig mit dem Spannkopf und dem Montagekopf ausgebildet ist. Dadurch können alle Abschnitte der Spannschraube mit geringem Fertigungsaufwand, beispielsweise durch Drehen, Pressen, spanloses Formen, Walzen oder Fräsen, aus Schraubrohlingen gefertigt werden.

In einer bevorzugten Ausführungsvariante weist der Montagekopf an seiner Unterseite einen konischen Ansatz auf, wobei der konische Ansatz zwischen der Scherebene und dem Montagekopf ausgebildet ist. Der konische Ansatz erleichtert ein Abscheren des Montagekopfes bei Überschreiten des vordefinierten Drehmoments und kann zum Beispiel als spitzwinklige Ringnut ausgeführt sein. Vorzugsweise ist der konische Ansatz mit seinem kleineren Durchmesser der Scherebene zugewandt. Bei Ausübung bzw. Überschreiten des vorbestimmten Drehmoments schert der Montagekopf vorzugsweise vollständig an der Scherebene ab. Durch die konische Form des Ansatzes und der gezielten Anordnung des kleineren Durchmessers an der Scherebene wird die Abscherfläche effektiv reduziert. Zudem wird dadurch ein sauberes Abscheren unterstützt und scharfe Kanten werden reduziert.

Nach einer weiteren Ausführungsform weist der Montagekopf an seiner Oberseite eine Ausnehmung zum formschlüssigen Einsatz eines Werkzeugs beim Anziehen der Spannschraube auf, wobei die Ausnehmung beispielsweise kreuzförmig ausgebildet ist. Zum Anziehen der Spannschraube wird dann kein spezielles Werkzeug benötigt. Aufgrund der kreuzförmigen Ausnehmung können herkömmliche Schraubendreher eingesetzt werden. Vorzugsweise weist der Montagekopf wenigstens zwei außenliegende, insbesondere parallel zueinander verlaufende Kanten auf, wobei der Montagekopf insbesondere als Sechskant ausgebildet ist. Dadurch können neben Kreuz- und Schlitzschraubendrehern auch Schraubenschlüssel zum Einbringen eines Drehmomentes bzw. zum Anziehen der Schraube eingesetzt werden. Alternativ sind auch Ausführungen, die den Einsatz eines Innentorx, Außentorx oder Innensechskant zulassen, denkbar.

In einer weiteren wichtigen Ausführungsform sieht die Erfindung vor, dass der Spannkopf eine untere Kontaktseite aufweist, die beim Anziehen der Spannschraube einen Presskontakt an der Spannvorrichtung der Schelle herstellt, wobei der Presskontakt über eine umlaufende Vorspannlippe an der Kontaktseite aufgebaut wird. Vorzugsweise weist der Spannkopf einen tellerförmigen Grundkörper auf, der sich zwischen der umlaufenden Vorspannlippe und der Scherebene erstreckt und im Durchmesser größer ausgebildet ist als der Montagekopf. Dabei ist der Spannkopf besonders bevorzugt als Sechskant ausgebildet. Aufgrund des mehrkantigen Aufbaus kann die Spannschraube bei Bedarf auch nach Abscheren des Montagekopfes über den Spannkopf manuell wieder gelöst werden. Der tellerförmige Grundkörper des Spannkopfes ist größer ausgebildet als der Montagekopf und presst sich beim Anziehen der Schraube an das zu befestigende Bauteil bzw. an die Spannvorrichtung. Die umlaufende Vorspannlippe verbessert dabei die Kraftübertragung vorteilhaft in Vorspannrichtung.

Dabei ist besonders bevorzugt, dass die umlaufende Vorspannlippe des Spannkopfes weiter in Vorspannrichtung ragt als der Grundkörper des Spannkopfes. Aufgrund der vorragenden, lippenförmigen Konstruktion der Vorspannlippe, wird die Vorspannkraft an der umlaufenden Vorspannlippe in Form einer Linienpressung eingeleitet. Dadurch wird die Kontaktfläche reduziert und die untere Kontaktseite reagiert steifer bei einer Belastung entgegen der Vorspannrichtung. Insgesamt wird aufgrund der reduzierten Umlaufberührung über die Vorspannlippe eine erhöhte Flächenpressung zwischen Spannkopf und Spannvorrichtung erzielt.

Nach einer weiteren Ausführungsform weist der Schaft einen konischen Übergang zum Grundkörper des Spannkopfs auf. Dadurch entsteht vorteilhafterweise eine Sicherung gegen unerwünschtes Lösen, weil die konische bzw. kegelige Formgebung des Übergangs die im Schraubenschaft wirkenden Reibungs- und Querkräfte beim Anziehen der Spannschraube vergrößert und bei Ausdehnung des Schraubenschaftes quasi für eine bessere metallische Dichtung sorgt.

In einer weiteren Ausführungsvariante sieht die Erfindung vor, dass der Montagekopf unmittelbar an der Scherebene des Spannkopfes als Hohlprofil ausgebildet ist. Vorzugsweise ist der Montagekopf auch in dieser Ausführungsvariante mehrkantig ausgebildet, um ein nachträgliches, manuelles Lösen zu ermöglichen. Die Ausnehmung an der Oberseite des Montagekopfes ist zylindrisch ausgebildet. Aufgrund der unmittelbaren, dünnwandigen Ausbildung des Montagekopfes an der Scherebene, verringert sich der gesamte Fertigungsaufwand der Spannschraube. Zusätzlich werden dadurch Materialkosten eingespart, weil der konische Ansatz entfällt und weniger Rohwerkstoff benötigt wird. Insgesamt werden durch diese zwei Faktoren die Gesamtproduktionskosten gesenkt. Um die Scherfläche an der Scherebene zu reduzieren, kann der Montagekopf vorzugsweise konisch ausgebildet sein.

Nach einer weiteren Ausführungsform ist die Schelle eine Schlauchschelle zum Befestigen eines Schlauchendes an einem festen Anschluss oder an einem Schlauchverbinder. Gerade bei Leitungs- bzw. Schlauchschellen, die insbesondere bei Leitungen in Kraftfahrzeugen eingesetzt werden, ist der Einsatz einer erfindungsgemäßen Spannschraube zur Sicherstellung eines vorbestimmten Drehmoments besonders vorteilhaft. Beim Spannen von Schlauchschellen besteht ein erhöhtes Risiko, das Schlauchmaterial durch ein zu großes Anzugsmoment zu verletzen. Das kann wiederum dazu führen, dass die Verbindung undicht wird. Zudem wird durch die erfindungsgemäße Spannschraube das Festziehen der Schlauchschelle ohne den Einsatz zusätzlicher Komponenten erheblich vereinfacht.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1a: eine schematische Ansicht einer erfindungsgemäßen Spannschraube;
- Fig. 1b: eine schematische Seitenansicht einer erfindungsgemäßen Spannschraube;
- Fig. 1c: eine schematische Ansicht einer erfindungsgemäßen Spannschraube ohne Montagekopf;
- Fig. 1d: eine Detaildarstellung des Kopf- und Schaftabschnittes der Spannschraube;
- Fig. 2a: eine Schnittdarstellung einer alternativen Ausführungsform der Spannschraube;
- Fig. 2b: eine Detailansicht eines Kopfbereichs der Spannschraube aus Fig. 2a;
- Fig. 2c: eine schematische Ansicht der Spannschraube aus Fig. 2a;
- Fig. 3a: eine erfindungsgemäße Spannschraube mit einer SchneckengewindeSchelle;
- Fig. 3b: eine erfindungsgemäße Spannschraube mit einer Profilschelle;
- Fig. 3c: eine erfindungsgemäße Spannschraube mit einer Abgasschelle;
- Fig. 3d: eine erfindungsgemäße Spannschraube mit einer Rohrschelle;

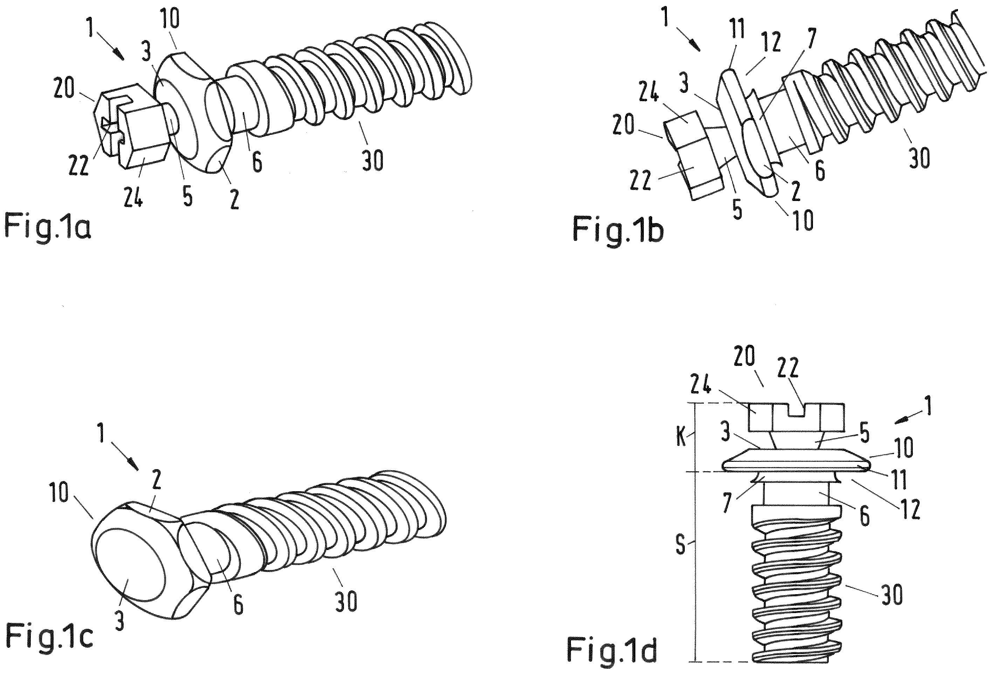

Die in Fig. 1a bis Fig. 1d allgemein mit 1 bezeichnete Spannschraube ist dazu geeignet, bei einer Schelle mit einem Schellenband, das zwei einander benachbarte Enden aufweist, die durch eine Spannvorrichtung miteinander verbindbar sind, an der Spannvorrichtung verschraubt zu werden, um so den Innendurchmesser der Schelle zu verkleinern und die Schelle festzuspannen (nicht dargestellt).

Wie man insbesondere in Fig. 1d erkennt, weist die Spannschraube 1 einen Kopfabschnitt K und einen Schaftabschnitt S auf. Dabei ist im Bereich des Kopfabschnitts K ein Montagekopf 20 zum Anziehen der Spannschraube 1 und zur Sicherstellung eines vordefinierten Drehmoments M vorgesehen. Zudem weist der Kopfabschnitt K einen Spannkopf 10 zum Aufbringen einer Vorspannkraft beim Anziehen der Spannschraube 1 auf.

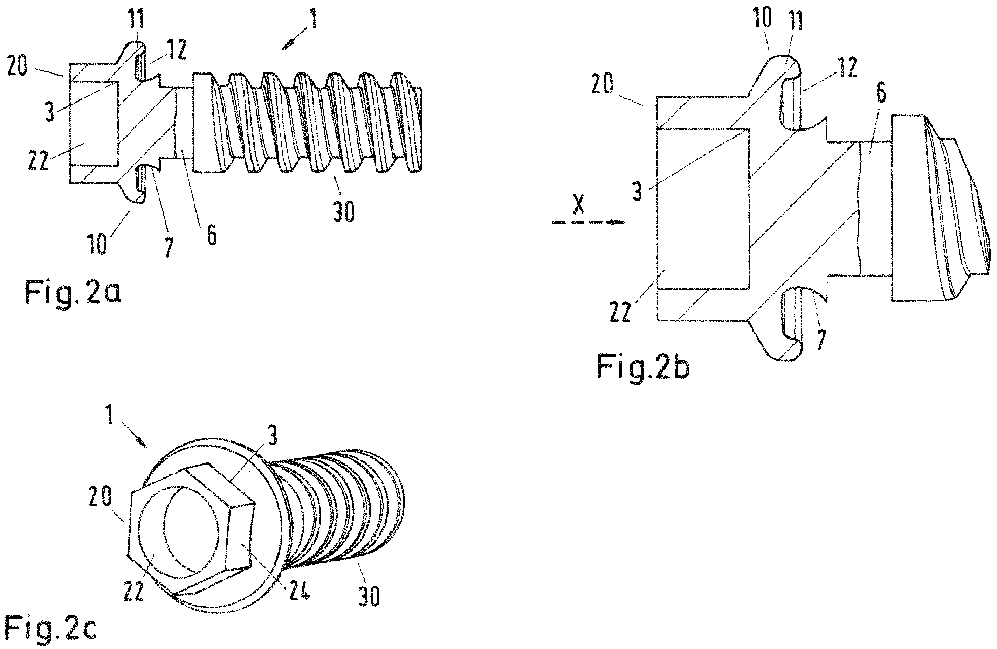

Weiter weist der Schaftabschnitt S einen Schraubenschaft 6 und einen daran anschließenden Gewindebereich 30 auf, mit der die Spannschraube 1 an der Spannvorrichtung (nicht gezeigt) verschraubbar ist. Ferner sind die in den Ausführungen nach Fig. 1 und Fig. 2 gezeigten Spannschrauben 1 einstückig ausgebildet.

Der Spannkopf 10 ist an seiner Oberseite mit einer Scherebene 3 versehen, die zwischen dem Spannkopf 10 und dem Montagekopf 20 angeordnet ist. Der Montagekopf 20 ist derart ausgelegt, dass er bei Ausübung bzw. Überschreiten des vordefinierten Drehmoments M an der Scherebene 3 vom Spannkopf 10 der Spannschraube 1 abschert (vgl. insbesondere Fig. 1c).

Wie in den Fig. 1b und 1d dargestellt, weist der Montagekopf 20 an seiner Unterseite einen konischen Ansatz 5 auf, wobei der konische Ansatz 5 zwischen der Scherebene 3 und dem Montagekopf 20 ausgebildet ist. Der konische Ansatz 5 verjüngt sich dabei in Vorspannrichtung. Der konische Ansatz 5 ist also mit seinem größeren Durchmesser dem Montagekopf zugewandt, wohingegen der kleinere Durchmesser des konischen Ansatzes 5 der Scherebene 3 an der Oberseite des Spannkopfes 10 zugewandt ist.

Weiter ist der Montagekopf an seiner Oberseite mit einer kreuzförmigen Ausnehmung 22 zum formschlüssigen Einsatz eines Werkzeugs (z.B. Schraubendreher) beim Anziehen der Spannschraube 1 versehen und ist als (Außen-) Sechskant ausgebildet. Eine der sechs Kanten ist mit der Bezugsziffer 24 bezeichnet.

Der Spannkopf 10 hat eine untere Kontaktseite 12, die beim Anziehen der Spannschraube 1, einen Presskontakt an der Spannvorrichtung der Schelle herstellt, wobei der Presskontakt über eine umlaufende Vorspannlippe 11 an der Kontaktseite 12 eingeleitet wird.

Durch eine Zusammenschau der Fig. 1d, Fig. 2a und Fig. 2b wird ersichtlich, dass der Spannkopf 10 einen tellerförmigen Grundkörper aufweist, der sich zwischen der umlaufenden Vorspannlippe 11 und der Scherebene 3 erstreckt und im Durchmesser größer ausgebildet ist als der Montagekopf 20. Die umlaufende Vorspannlippe 11 des Spannkopfes 10 ragt weiter in Vorspannrichtung X als der tellerförmige Grundkörper des Spannkopfes 10. Der Schaft 6 weist dabei einen konischen Übergang 7 zum tellerförmigen Grundkörper des Spannkopfs 10 auf. Ferner weist der Spannkopf 10 zum manuellen Lösen wenigstens zwei Kanten 2 auf.

Fig. 2a bis Fig. 2c beziehen sich auf eine alternative Ausführungsvariante der Erfindung, wonach der Montagekopf 20 unmittelbar an der Scherebene 3 des Spannkopfes 10 als Hohlprofil ausgebildet ist. Die Scherebene 3 ist dabei quasi als Trennebene zu verstehen, an der sich der Montagekopf 20 beim Abscheren vom Spannkopf 10 trennt. Die Ausnehmung 22 ist an der Oberseite des Montagekopfs 20 zylindrisch ausgebildet, wobei die Außengeometrie des Montagekopfs mehrere Kanten 24 aufweist.

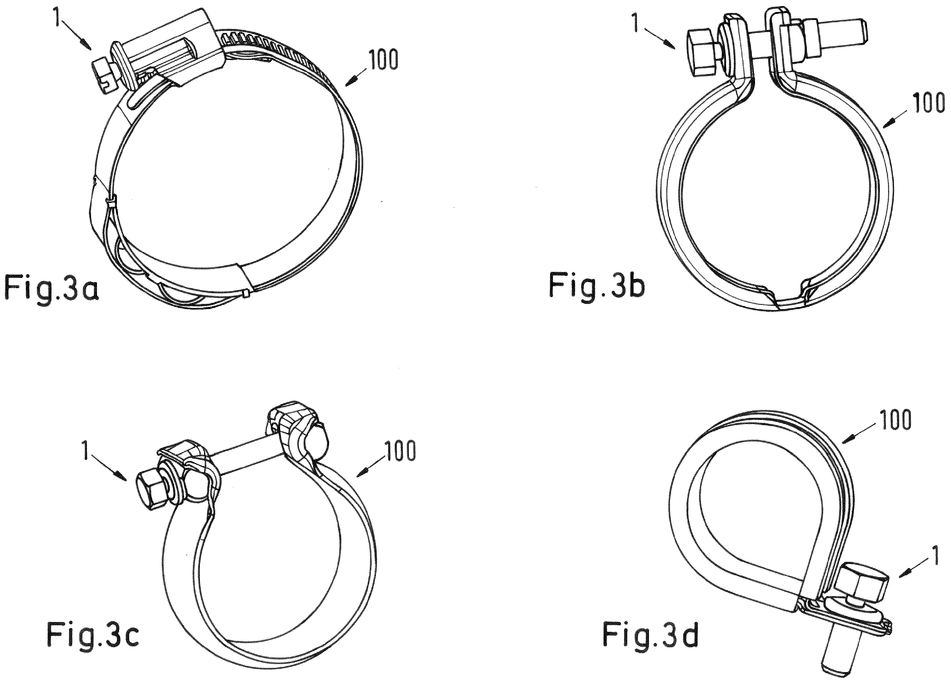

Die Fig. 3a bis 3d beleuchten verschiedene Anwendungsbeispiele der erfindungsgemäßen Spannschraube 1. Dabei werden unterschiedliche Schellen 100 über die erfindungsgemäße Spannschraube 1 gespannt bzw. festgelegt.

In Fig. 3a ist die Spannschraube 1 an einer Spannvorrichtung einer SchneckengewindeSchelle 100 angebracht.

Fig. 3b zeigt eine Profilschelle 100 die an ihren Enden über eine Spannschraube 1 gespannt wird.

In Fig. 3c ist eine Abgasschelle bzw. Kugelzonenabgasschelle 100 dargestellt. Die erfindungsgemäße Spannschraube 1 ist durch Öffnungen an den Enden der Abgasschelle 100 hindurchgeführt.

Fig. 3d zeigt eine Rohrschelle 100 die zwei übereinanderliegende bzw. aufeinanderliegende Schenkel aufweist, die über eine Spannschraube 1 gespannt werden. Die Spannschraube 1 ist durch die Schenkel hindurchgeführt.

Die erfindungsgemäße Schelle mit Spannschraube kann sich allgemein auf Leitungs- und Spannschellen beziehen, wo eine Sicherstellung eines vordefinierten Drehmoments gefordert wird. Insbesondere bezieht sich die Erfindung auf Anwendungen im Bereich der Fahrzeugtechnik, wie beispielsweise Schlauchschellen mit Spannköpfen, die über die Spannschraube verbunden werden. Die Schelle kann aber auch als Schneckengewindeschelle mit einem Gehäuse, in dem die Spannschraube geführt ist, ausgebildet sein. Alternativ kann die Schelle auch als Profilschelle, Halterungsschelle, Rohrschelle oder Spannschelle zum Verbinden zweier Rohrenden ausgebildet sein.

### Bezugszeichenliste

| | | | |
|---|---|---|---|
| K | Kopfabschnitt Schraube | 10 | Spannkopf |
| S | Schaftabschnitt Schraube | 11 | Vorspannlippe |
| X | Vorspannrichtung | 12 | Kontaktseite |
| M | Vordefiniertes Drehmoment | 20 | Montagekopf |
| | | 22 | Ausnehmung |
| 1 | Spannschraube | 24 | Kante |
| 2 | Kante | 30 | Gewindebereich |
| 3 | Scherebene | 100 | Schelle |
| 5 | Konischer Ansatz | | |
| 6 | Schaft | | |
| 7 | Konischer Übergang | | |

## Patentansprüche

1. Schelle (100) mit einem Schellenband, das zwei Enden aufweist, die durch eine Spannvorrichtung miteinander verbunden sind, die eine Spannschraube (1) mit einem Kopfabschnitt (K) und einem Schaftabschnitt (S) aufweist, wobei der Schaftabschnitt (S) einen Gewindebereich (30) aufweist und der Kopfabschnitt (K) einen Spannkopf (10) zum Aufbringen einer Vorspannkraft und einen Montagekopf (20) zum Anziehen der Spannschraube (1) aufweist, wobei der Spannkopf (10) an seiner Oberseite eine Scherebene (3) aufweist, wobei die Scherebene (3) zwischen dem Spannkopf (10) und dem Montagekopf (20) angeordnet ist, wobei der Montagekopf (20) bei Ausübung eines vordefinierten Drehmoments (M) an der Scherebene (3) vom Spannkopf (10) der Spannschraube (1) abschert, **dadurch gekennzeichnet, dass** der Spannkopf (10) wenigstens zwei Kanten (2) aufweist.

2. Schelle nach Anspruch 1, **dadurch gekennzeichnet, dass** die Spannschraube (1) einstückig mit dem Spannkopf (10) und dem Montagekopf (20) ausgebildet ist.

3. Schelle nach Anspruch 1 oder 2, **dadurch gekennzeichnet, dass** der Montagekopf (20) an seiner Unterseite einen konischen Ansatz (5) aufweist, wobei der konische Ansatz (5) zwischen der Scherebene (3) und dem Montagekopf (20) ausgebildet ist.

4. Schelle nach einem der vorangehenden Ansprüche, **dadurch gekennzeichnet, dass** der Montagekopf (20) an seiner Oberseite eine Ausnehmung (22) zum formschlüssigen Einsatz eines Werkzeugs beim Anziehen der Spannschraube (1) aufweist, wobei die Ausnehmung (22) insbesondere kreuzförmig ausgebildet ist.

5. Schelle nach einem der vorangehenden Ansprüche, **dadurch gekennzeichnet, dass** der Montagekopf (20) wenigstens zwei Kanten (24) aufweist, wobei der Montagekopf (20) insbesondere als Sechskant ausgebildet ist.

6. Schelle nach einem der vorangehenden Ansprüche, **dadurch gekennzeichnet, dass** der Spannkopf (10) eine untere Kontaktseite (12) aufweist, die beim Anziehen der Spannschraube (1) einen Presskontakt an der Spannvorrichtung der Schelle herstellt, wobei der Presskontakt über eine umlaufende Vorspannlippe (11) an der Kontaktseite (12) aufgebaut wird.

7. Schelle nach Anspruch 6, **dadurch gekennzeichnet, dass** der Spannkopf (10) einen tellerförmigen Grundkörper aufweist, der sich zwischen der umlaufenden Vorspannlippe (11) und der Scherebene (3) erstreckt und im Durchmesser größer ausgebildet ist, als der Montagekopf (20).

8. Schelle nach Anspruch 7, **dadurch gekennzeichnet, dass** die umlaufende Vorspannlippe (11) des Spannkopfes (10) weiter in Vorspannrichtung (X) ragt, als der Grundkörper des Spannkopfes (10).

9. Schelle nach Anspruch 7 oder 8, **dadurch gekennzeichnet, dass** der Schaft (6) einen konischen Übergang (7) zum Grundkörper des Spannkopfs (10) aufweist.

10. Schelle nach einem der vorhergehenden Ansprüche, **dadurch gekennzeichnet, dass** die Schelle eine Schlauchschelle zum Befestigen eines Schlauchendes an einem festen Anschluss oder an einem Schlauchverbinder ist.

## Claims

1. Clip (100) having a clip band which has two ends which are connected to each other by a clamping apparatus which has a clamping screw (1) having a head portion (K) and a shaft portion (S), wherein the shaft portion (S) has a thread region (30) and the head portion (K) has a clamping head (10) for applying a pretensioning force and an assembly head (20) for tightening the clamping screw (1), wherein the clamping head (10) has a shear plane (3) at the upper side thereof, wherein the shear plane (3) is arranged between the clamping head (10) and the assembly head (20), wherein the assembly head (20) shears off from the clamping head (10) of the clamping screw (1) at the shear plane (3) if a predefined torque (M) is applied, **characterized in that** the clamping head (10) has at least two sides (2).

2. Clip according to Claim 1, **characterized in that** the clamping screw (1) is configured integrally with the clamping head (10) and the assembly head (20).

3. Clip according to Claim 1 or 2, **characterized in that** the assembly head (20) has at the lower side thereof a conical attachment (5), wherein the conical attachment (5) is formed between the shear plane (3) and the assembly head (20).

4. Clip according to one of the preceding claims, **characterized in that** the assembly head (20) has at the upper side thereof a recess (22) for the positive-locking insertion of a tool when the clamping screw (1) is tightened, wherein the recess (22) is in particular cross-like.

5. Clip according to one of the preceding claims, **characterized in that** the assembly head (20) has at least two sides (24), wherein the assembly head (20) is particularly in the form of a hexagon.

6. Clip according to one of the preceding claims, **characterized in that** the clamping head (10) has a lower contact side (12) which produces a pressing contact at the clamping apparatus of the clip when the clamping screw (1) is tightened, wherein the pressing contact is produced over a circumferential pretensioning lip (11) at the contact side (12).

7. Clip according to Claim 6, **characterized in that** the clamping head (10) has a plate-like main body which extends between the circumferential pretensioning lip (11) and the shear plane (3) and which is configured to be greater in diameter than the assembly head (20).

8. Clip according to Claim 7, **characterized in that** the circumferential pretensioning lip (11) of the clamping head (10) projects further in the pretensioning direction (X) than the main body of the clamping head (10).

9. Clip according to Claim 7 or 8, **characterized in that** the shaft (6) has a conical transition (7) to the main body of the clamping head (10).

10. Clip according to one of the preceding claims, **characterized in that** the clip is a hose clip for securing a hose end to a fixed connection or to a hose connector.

## Revendications

1. Collier de serrage (100) avec une bande de collier de serrage, qui comporte deux extrémités, qui sont reliées l'une à l'autre par un dispositif de serrage, qui comporte une vis de serrage (1) avec une partie tête (K) et une partie tige (S), la partie tige (S) comportant une zone filetée (30) et la partie tête (K) comportant une tête de serrage (10) pour appliquer une force de précontrainte et une tête de montage (20) pour serrer la vis de serrage (1), la tête de serrage (10) comportant un plan de cisaillement (3) sur sa face supérieure, le plan de cisaillement (3) étant disposé entre la tête de serrage (10) et la tête de montage (20), la tête de montage (20) cisaillant la tête de serrage (10) de la vis de serrage (1) lorsqu'un couple de rotation prédéfini (M) est exercé sur le plan de cisaillement (3), **caractérisé en ce que** la tête de serrage (10) comporte au moins deux arêtes (2).

2. Collier de serrage selon la revendication 1, **caractérisé en ce que** la vis de serrage (1) est réalisée d'une seule pièce avec la tête de serrage (10) et la tête de montage (20).

3. Collier de serrage selon la revendication 1 ou 2, **caractérisé en ce que** la tête de montage (20) comporte sur sa face inférieure une partie saillante conique (5), la partie saillante conique (5) étant formée entre le plan de cisaillement (3) et la tête de montage (20).

4. Collier de serrage selon l'une des revendications précédentes, **caractérisé en ce que** la tête de montage (20) comporte sur sa face supérieure un évidement (22) pour l'insertion par complémentarité de forme d'un outil lors du serrage de la vis de serrage (1), l'évidement (22) étant en particulier réalisé en forme de croix.

5. Collier de serrage selon l'une des revendications précédentes, **caractérisé en ce que** la tête de montage (20) comporte au moins deux arêtes (24), la tête de montage (20) étant réalisée en particulier sous la forme d'un hexagone.

6. Collier de serrage selon l'une des revendications précédentes, **caractérisé en ce que** la tête de serrage (10) comporte une face de contact inférieure (12) qui, lors du serrage de la vis de serrage (1), produit un contact de pression sur le dispositif de serrage du collier de serrage, le contact de pression étant formé par une lèvre de précontrainte périphérique (11) sur la face de contact (12).

7. Collier de serrage selon la revendication 6, **caractérisé en ce que** la tête de serrage (10) comporte un corps de base en forme de plaque qui s'étend entre la lèvre de précontrainte périphérique (11) et le plan de cisaillement (3) et qui présente un diamètre supérieur à celui de la tête de montage (20).

8. Collier de serrage selon la revendication 7, **caractérisé en ce que** la lèvre de précontrainte périphérique (11) de la tête de serrage (10) dépasse plus loin dans la direction de précontrainte (X) que le corps de base de la tête de serrage (10).

9. Collier de serrage selon la revendication 7 ou 8, **caractérisé en ce que** la tige (6) comporte une transition conique (7) vers le corps de base de la tête de serrage (10).

10. Collier de serrage selon l'une des revendications précédentes, **caractérisé en ce que** le collier de serrage est un collier de serrage pour tuyau flexible destiné à fixer une extrémité de tuyau flexible à un raccord fixe ou à un connecteur de tuyau flexible.
